# EUROPÄISCHE PATENTSCHRIFT

(11) **EP 1 604 047 B1**
(45) Veröffentlichungstag und Bekanntmachung des Hinweises auf die Patenterteilung: **16.08.2006**
(21) Anmeldenummer: 04718618.4
(22) Anmeldetag: 09.03.2004
(51) Int. Cl.: C22B 11/00, C22B 1/00, C22B 3/00

(54) **VERFAHREN ZU RAFFINATION VON GOLD**
METHOD FOR THE REFINEMENT OF GOLD
PROCEDE POUR LE RAFFINAGE D'OR

(30) Priorität: 10.03.2003 DE 10310641
(43) Veröffentlichungstag der Anmeldung: 14.12.2005
(73) Patentinhaber: OTB Oberflächentechnik in Berlin GmbH & Co., 12277 Berlin (DE)
(72) Erfinder: HERRMANN, Sigrid, 12487 Berlin (DE); LANDAU, Uwe, 14169 Berlin (DE)
(74) Vertreter: Tilger, Bernhard
(86) Internationale Anmeldenummer: PCT/DE2004/000465
(87) Internationale Veröffentlichungsnummer: WO 2004/081244

(56) Entgegenhaltungen:
- US-A- 4 094 668
- US-A- 4 670 052
- US-B1- 6 455 018

## Beschreibung

Die vorliegende Erfindung betrifft ein Verfahren zur Raffination metallisch verunreinigten Goldes. Dieses Verfahren ist insbesondere zur Raffination pulverförmigen, zerkleinerten, kleinteiligen, folienartigen oder drahtförmigen Goldes geeignet.

Im Vordergrund der Goldabtrennung steht die Goldabtrennung aus Erzen oder aus Goldrücklaufmaterialien. Der Goldabtrennung folgt zunächst eine Grobreinigung des gewonnenen Goldes bis zu einer Reinheit von etwa 98 - 99 %, der sich dann, je nach Anwendungszweck und Reinheitserfordernis, noch eine Feinstreinigung bis hin zu einer Reinheit von etwa 99,999 % anschließen kann. Abhängig vom Ausgangsmaterial und den darin enthaltenen Verunreinigungen sowie der gewünschten Endreinheit müssen die Reinigungsschritte hierbei geeignet gewählt werden. Universalverfahren für die Abreicheung sämtlicher als Verunreinigungen enthaltener Elemente und sämtlicher Konzentrationsbereiche sind nicht bekannt.

**Tab. 1**

| Verunreinigung | Konzentration (%) |
|---|---|
| Cu | 18-50 |
| Ni | 1,5-3,0 |
| Ag | 0,05-0,1 |
| Pd | 0,05-0,1 |
| Zn | 0,3 - 0,8 |
| Sn | 0,04 - 0,1 |
| Pb | 0,8 -1,5 |

Bei Gold-Recyclingmaterial aus Elektronikschrott, wie z.B. Kontaktmaterial, Leiterplatten, Steckverbinder oder dergleichen, das durch das Vordringen der Elektronik in nahezu alle Lebensbereiche eine zunehmend größere wirtschaftliche Bedeutung erlangt, treten bevorzugt die in der obigen Tabelle 1 zusammengestellten, charakteristischen metallischen Verunreinigungen in den angegebenen Konzentrationsbereichen auf. Insbesondere die Konzentration des Kupfers kann hierbei jedoch je nach Ausgangsmaterial stark unterschiedlich sein. Sie kann gegebenenfalls auch weit außerhalb des angegebenen Konzentrationsbereichs liegen und beispielsweise auch mehr als 50 % betragen oder auch im einstelligen Konzentrationsbereich liegen.

Darüber hinaus können auch noch Spurenverunreinigungen an Fe, Cr, Be, Co u.a. vorhanden sein. Alle diese Elemente müssen möglichst problemlos und vollständig aus dem Gold entfernt werden, wobei sich üblicherweise jedoch insbesondere die Abreicherung von Silber und Palladium infolge ihrer chemischen Ähnlichkeit mit Gold als besonders schwierig erweist.

Das Gold-Recyclingmaterial kann aus dem anfallenden Elektronikschrott beispielweise durch Lösen in einer ein Oxidationsmittel umfassenden salzhaltigen Alkalicyanidlösung und anschließende elektrolytische Abscheidung des gelösten Goldes aus der dann durch den Kontakt mit dem Elektronikschrott entsprechend metallisch verunreinigten Alkalicyanidlösung zurückgewonnen werden. Diese Abscheidung erfolgt vorzugsweise in Pulverform, um zusätzliche Verunreinigungen zu vermeiden, wie sie beim Abscheiden des Goldes in fester Form auf Kupferschaumstoffkathoden oder mit Kupfer bedeckten Kunststoffkathoden unvermeidlich sind. Zur Rückgewinnung des Goldes müssen diese nach der Elektrolyse üblicherweise nämlich zunächst noch eingeschmolzen werden, bevor das Gold dann mittels einer Salpetersäurebehandlung vom Kupfer getrennt wird.

Ähnliche Zusammensetzungen wie diese verunreinigten Alkalicyanidlösungen besitzen auch Spüllösungen von cyanidischen Goldbädern, die zur Rückgewinnung des Goldes aufgearbeitet werden müssen. Das in diesen Lösungen enthaltene Gold wird üblicherweise mit Zinkstaub oder Aluminiumgrieß als Pulver abgeschieden. Da hierbei jedoch zusätzliche Verunreinigungen eingebracht werden, ist auch hier eine elektrolytische Abscheidung in Pulverform zu bevorzugen.

Die US-A-4 670 052 beschreibt die Rückgewinnung von Gold aus edelmetallhaltigen elektrolytischen Schlämmen durch Lösen der Edelmetalle (Gold, Silber und Metalle der Platingruppe) mit konzentrierter Salzsäure und Wasserstoffperoxid, Abscheiden von unlöslichem Silberchlorid, selektives Fällen von Gold durch Reduktion mit Schwefeldioxid unter Anwesenheit von Natriumiunen und Waschen des gefällten Goldes.

Die US-A-6 455 018 offenbart die Rückgewinnung von Edelmetallen, inasbesondere Platin, Palladium und Rhodium, aus Nachverbrennungs-Katalysatoren durch Vermischen des Katalysatormaterials mit Schwefelsäure; sulfatisierendes Rösten bei einer Temperatur zwischen 150 und 450 °C und anschließendes Lösen der Edelmetalle in einer wässrigen Lösung mit H⁺-lonen und Cl⁻-lonen. Zum Lösen der Edelmetalle kann auch ein Oxidationsmittel, wie z.B. Wasserstoffperoxid, zugesetzt werden. Die gelösten Edelmetalle werden dann aus der Lösung zurückgewonnen und gereinigt. In einem vorgeschalteten Verfahrensschritt kann das Katalysatormaterial auch zunächst in einer reduzierenden Atmosphäre bei einer Temperatur zwischen 300 und 800 °C für eine bestimmte Zeit einer Wärmebehandlung unterzogen werden.

Die Aufgabe der vorliegenden Erfindung besteht in der Schaffung eines einfachen und kostengünstigen Verfahrens zur Grobreinigung oder Grobraffination metallisch verunreinigten Goldes mit einem Ausgangs-Goldgehalt von zumindest etwa 40 - 70 %. In Ausnahmefällen soll es jedoch auch die Raffination stärker verunreinigten Goldes ermöglichen. Das gesuchte Raffinationsverfahren soll insbesondere eine problemlose Abreicherung der oben genannten metallischen Verunreinigungen ermöglichen und daher für eine Raffination von Recyclingmatrial aus Elektronikachrott besonders gut geeignet sei, wie - es beispielsweise durch eine Göldelektrolyse aus entsprechenden Cyanidlösungen gewonnen wird. Es soll daher insbesondere zur Raffination pulverförmigen, zerkleinerten, kleinteiligen, folienartigen oder drahtförmigen Goldes geeignet sein. Das gesuchte Raffinationsverfahren soll durch eine günstige Nutzung von möglichst einfachen, apparativ unaufwendigen und problemlos zu automatisierenden chemischen Verfahren und den Einsatz von handelsüblichen preiswerten Chemikalien gekennzeichnet sein und durch einen möglichst geringen Arbeits- und Zeitaufwand eine sehr einfache und wirtschaftliche Betriebsweise ermöglichen. Durch eine möglichst geringe Umweltbelastung und einen Recyclingbetrieb für die eingesetzten Chemikalien unter Rückgewinnung der abgetrennten metallischen Verunreinigungen soll es zudem auch ökologisch möglichst unbedenklich sein.

Diese Aufgabe wird erfindungsgemäß durch ein Verfahren gemäß Anspruch 1 gelöst. Besonders bevorzugte Verfahrensvarianten sind den zugehörenden Unteransprüchen zu entnehmen.

Bei dem erfindungsgemäßen Verfahren wird das zu raffinierende Gold zunächst bei hinreichend hohen Temperaturen geglüht, um durch Oxidation der vorhandenen metallischen Verunreinigungen einen möglichst hohen Anteil an Metalloxiden zu erhalten.

Beim Glühen wird das Zinn in schwerlösliches Zinnoxid überführt. Gleichzeitig wird der Oxidanteil des Kupfers erhöht und es werden die Oxide des Nickels gebildet. Anteilig werden auch das in geringen Mengen vorhandene Silber und Palladium aufoxidiert. Blei wird zu Bleioxid umgesetzt und Zink als sehr unedles Metall bildet ebenfalls Zinkoxid.

Goldpulver, das durch elektrolytische Abscheidung aus Cyanidlösungen gewonnen wurde, enthält bereits einen relativ hohen Anteil an Metalloxiden, da metallische Verunreinigungen bei den für die Abscheidung erforderlichen hohen Stromdichten bevorzugt in Form ihrer Oxide abgeschieden werden. Dieser bereits vorhandene relativ hohe Metalloxidanteil wird durch das Glühen noch einmal entsprechend stark erhöht. Nach dem Glühen beträgt der Oxidanteil an den Verunreinigungen bei feinkörnigem Goldpulver dieser Art etwa 80 % und bei grobkörnigem Goldpulver etwa 50 %.

Die gebildeten Metalloxide wirken sich sehr positiv auf den weiteren Raffinationsprozess aus, da sie bei der nachfolgenden erfindungsgemäßen Säurebehandlung mit konzentrierter Salzsäure gut löslich sind. Zum Erreichen eines optimalen Löseeffektes durch Bildung einer möglichst großen Menge an Metalloxiden wird das Gold vorzugsweise bei einer Glühtemperatur von etwa 450 - 550 °C für etwa 1,5 - 2,5 h geglüht. Hierbei erweisen sich insbesondere eine Glühtemperatur von etwa 500 °C und eine Glühzeit von etwa 2 h als besonders günstig, da bei diesen Glühbedingungen der höchste Anteil an Metalloxiden gebildet wird.

Vor dem Glühen wird das Gold vorzugsweise zunächst erst gewaschen und anschließend getrocknet. Aus Cyanidlösungen elektrolytisch abgeschiedenes, verunreinigtes Goldpulver enthält bedingt durch die Zusammensetzung der Ausgangslösung Anteile an cyanidischen Komplexverbindungen, die sich durch das Waschen des Pulvers bis zu einem pH-Wert von 7 entfernen lassen.

Zu Schaffung möglichst einheitlicher Reaktionsbedingungen wird vorzugsweise Gold mit einer im wesentlichen einheitlichen Korngröße zwischen etwa 10 und 1000 Mikrometer, insbesondere zwischen etwa 10 und 200 Mikrometer, verwendet. Dieses Gold kann dann vor der Säurebehandlung, beispielsweise durch eine einfache Siebanalyse, noch in einzelne Chargen oder Fraktionen aufgeteilt werden, die jeweils eine im wesentlichen einheitliche Korngröße mit einer sehr viel engeren Korngrößenverteilung im zweistelligen Mikrometerbereich besitzen und separat der weiteren erfindungsgemäßen Säurebehandlung unterzogen werden.

Bei der elektrolytischen Abscheidung von Goldpulver aus Cyanidlösungen wird üblicherweise gezielt mit den gleichen Elektrolyseparametern (Temperatur, Stromdichte, Elektrodenfläche, Elektrolytbewegung) gearbeitet. Bedingt durch die Abscheidung des an den Cyanidionen gebundenen Metalls verändert sich der Gehalt an Cyanid. Dadurch wird am Anfang bevorzugt der Hauptteil des Goldes als feinkörniges Pulver abgeschieden, während mit zunehmender Abnahme des Goldgehaltes in der Lösung in Abhängigkeit vom jeweiligen Goldgehalt immer grobkörnigeres Goldpulver abgeschieden wird. Die Goldkonzentration fällt daher mit zunehmender Korngröße des abgeschiedenen Goldpulvers stark ab, während der Anteil an metallischen Verunreinigungen entsprechend stark zunimmt. Die nach der Korngröße unterteilten einzelnen Fraktionen dieses Goldpulvers weisen daher auch jeweils eine im wesentlichen einheitliche Goldkonzentration mit einem jeweils entsprechenden einheitlich hohen Anteil an metallischen Verunreinigungen auf. Gegebenenfalls kann das Gold jedoch auch mit einer mittleren Korngröße - die naturgemäß eine bestimmte enge Korngrößenverteilung aufweist - und einem mitleren Goldgehalt bzw. Verunreinigungsgrad abgeschieden werden.

Granuliertes Material hingegen besitzt zwar auch eine bestimmte Korngrößenverteilung, es weist im Unterschied zu dem aus Cyanidlösungen gewonnen Goldpulver jedoch unabhängig von seiner Korngröße eine einheitliche oder homogene Zusammensetzung auf.

Durch die Aufteilung des Goldpulvers in einzelne Chargen oder Fraktionen mit einer im wesentlichen einheitlichen Größe oder Korngröße wird der erforderliche Bearbeitungsaufwand somit gezielt auf die jeweilige Größe bzw. Korngröße und damit gegebenenfalls auch auf den Goldgehalt der einzelnen Fraktionen abgestimmt und optimal angepaßt, so dass sich schnellere und bessere Raffinationsergebnisse bei gleichzeitiger Minimierung des erforderlichen Arbeits- und Chemikalienaufwandes ergeben.

Anschließend wird das Gold in einem ersten Säure-Behandlungsschritt mit konzentrierter Salzsäure behandelt, durch die zunächt im wesentlichen die im Gold vorhandenen Metalloxide gelöst werden. Die Oxide des Kupfers, Eisens und Nickels sind in der konzentrierten Salzsäure leicht löslich. Diese Reaktion ist stark exotherm, wobei zu Beginn Reaktionstemperaturen von bis zu etwa 90 - 100 °C auftreten, Diese hohen Temperaturen erleichtern wiederum das Lösen des löslichen Anteils an Zinnoxid und des etwas schwerer löslichen Bleioxids. Durch die erfindungsgemäße Verwendung konzentrierter Salzsäure wird somit durch Ausnutzung der freiwerdenden Reaktionswärme auf sehr einfache, äußerst ökonomische Art und Weise eine höhere Löslichkeit der vorhandenen Oxide von Zinn und Blei in Form ihrer Chlorokomplexe erreicht. Die Oxide des Palladiums und Silbers sind nur schwer löslich. Sie reagieren mit der konzentrierten Salzsäure zum leicht löslichen Chlorokomplex. Da die Löslichkeit des Palladiumoxids mit der Zeit und mit sinkender Tempertur auch noch abnimmt, wird dessen Löslichkeit durch die entstehenden hohen Reaktionstemperaturen ebenfalls begünstigt.

Durch geeignete wärmetechnische Maßnahmen, wie z.B. eine gezielte Wärmezufuhr und/oder eine Verringerung der Wärmeabfuhr durch eine geeignete Wärmeisolation, kann dieser Temperatureffekt gegebenenfalls noch verstärkt und die Abreicherung der Metalloxide durch eine geeignete Temperaturführung mit hinreichend hohen Temperaturen entsprechend verbessert werden.

Beim Umsetzen der konzentrierten Salzsäure mit den Oxidanteilen des Kupfers bildet sich eine Kupfer-II-chloridlösung, die entsprechend ihrem Redoxpotental neben metallischen Kupfer auch die metallischen Verunreinigungen Nickel, Blei und Zink löst.

Die Behandlung des Goldes mit der konzentrierten Salzsäure kann über das Redoxpotential überwacht und der Einsatz der Salzsäure bedarfsgerecht gesteuert werden. Das Redoxpotential sinkt im Verlauf der Reaktion von einem Anfangswert von etwa 500 mV bis auf einen Endwert von etwa 400 mV ab, bei dem der Lösevorgang im wesentlichen abgeschlossen ist und die Behandlung mit Salzsäure entsprechend beendet werden kann.

Nach dem Erreichen dieses ersten Redoxpotential-Endwertes wird vorzugsweise noch Luft durch das mit Säure angefeuchtete Gold geleitet, um das durch Reaktion des Kupfers mit der Salzsäure gebildete einwertige Kupferchlorid zumindest teilweise aufzuoxidieren. Diese Oxidationsreaktion verläuft unter starker Wärmeentwicklung, wobei Reaktionstemperaturen von mehr als etwa 100 °C erreicht werden. Der Reaktionsverlauf kann durch Messung der Temperatur recht einfach überwacht und über die Luftzufuhr gegebenenfals bedarfsgerecht gesteuert werden. Bei einem Absinken der Reaktionstemperatur auf weniger als etwa 100 °C erfolgt keine nennenswerte Aufoxidation mehr und das Durchleiten von Luft kann beendet werden.

Für die weitere Reinigung des Goldes wird anschließend eine Lösung eingesetzt, die eine geringe Menge eines Oxidationsmittels enthält. Das Gold wird in einem zweiten Säure-Behandlungsschritt vorzugsweise mit einer Salzsäure-Wasserstoffperoxid-Mischung behandelt, die bis zu etwa 120 ml, insbesondere jedoch etwa 30 - 120 ml, Wasserstoffperoxid pro Liter Salzsäure umfaßt. Diese erneute Säurebehandlung des Goldes kann wieder über das Redoxpotential überwacht und über das Mischungsverhältnis von Salzsäure und Wasserstoffperoxid bedarfsgerecht gesteuert werden. Beim Erreichen eines zweiten Redoxpotential-Endwertes, auf den das Redoxpotential, ausgehend von einem Anfangswert, im Verlauf der Säurebehandlung allmählich absinkt, ist der Reinigungsvorgang im wesentlichen abgeschlossen und die Behandlung kann beendet werden.

Bei diesem zweiten Säure-Behandlungsschritt können auch andere Oxidationsmittel, wie z.B. Chlor, Natriumchlorat oder Alkali- und Ammoniumsalze der Persulfate eingesetzt werden. Hierbei ergibt sich jedoch eine zusätzliche Aufsalzung der Lösung.

Die beschriebenen Säurebehandlungen des Goldes können im Batch- oder Säulenverfahren erfolgen. Das Säulenverfahren erweist sich hierbei jedoch insbesondere bei der Anwesenheit des relativ schwer löslichen Zinns oder Bleis als besonders vorteilhaft, da sich in einer Lösesäule zum einen längere Reaktionszeiten des Materials mit der Salzsäure ergeben und zum anderen die bei den beschriebenen exothermen Reaktionen freiwerdende Reaktionswärme besser für die erwünschte Raffination ausgenutzt wird. Je nach Goldkonzentration oder Größe bzw. Korngröße des Goldes können hierbei zur Verbesserung der Reinigungswirkung Säuleneinrichtungen mit unterschiedlichen Durchmessern und/oder unterschiedlich gestalteten Ausläufen verwendet werden.

Nach der Behandlung des Goldes mit Salzsäure und Wasserstoffperoxid wird das gereinigte Gold vorzugsweise noch mit konzentrierter Salzsäure und entionisiertem Wasser gewaschen und anschließend getrocknet. Es kann dann, je nach Bedarf, entweder in einem nachfolgenden Feinstraffinationsverfahren bis zu der gewünschten Reinheit weiter gereinigt, oder aber auch mit der durch das vorliegende Raffinationsverfahren ereichten Reinheit direkt einer weiteren Verwendung zugeführt werden.

Die in der Salzsäure gelösten metallischen Verunreinigungen können vorzugsweise durch Membranelektrolyse zurückgewonnen werden. Die gereinigte Salzsäure kann dann im Kreislauf geführt und erneut zur Raffination verwendet werden.

Durch diese Kreislaufführung der eingesetzten Chemikalien, die Rückgewinnung der abgetrennten Metalle und die Vermeidung schädlicher Abgase erweist sich das vorliegende erfindungsgemäße Verfahren ökologisch als äußerst vorteilhaft. Durch den Einsatz von handelsüblichen biligen Chemikalien, den zur Raffination erforderlichen geringen Arbeits- und Zeitaufwand und die günstige Möglichkeit zur Automatisierung des Verfahrens ist es darüber hinaus auch ökonomisch sehr günstig. Durch eine gezielte Vorbehandlung des Goldes, wie z.B. eine einfache Aufteilung nach der Größe oder Korngröße oder in unterschiedlich stark verunreinigte Goldfraktionen entsprechend der Korngröße, kann zudem der jeweils erforderliche Raffinationsaufwand zur Reinigung einer bestimmten Goldfraktion und zur Erreichung einer bestimmten Goldkonzentration jeweils gezielt gesteuert und für den speziellen Anwendungsfall optimiert werden, was zu einer weiteren Verbesserung der Wirtschaftlichkeit des vorliegenden erfindungsgemäßen Raffinationsverfahrens führt. Kupfer kann hierbei in einer Konzentration von etwa 0 - 60 %, in Ausnahmefällen sogar bis zu etwa 70 % in dem Ausgangsmaterial vorhanden sein. Der Anteil von Nickel, Zinn und Blei kann üblicherweise einige wenige Prozent betragen, während Ag, Pd, Zn, Fe, Cr, Be und/oder Co als Spurenelemente mit einem Anteil von typischerweise weniger als etwa 1 % vorhanden sein können.

Das erfindungsgemäße Verfahren ist insbesondere für die Abreicherung von Cu, Ni, Ag, Pd, Zn, Sn, Pb, Fe, Cr, Be und/oder Co und den entsprechenden Metalloxiden aus feinkörnigem Goldpulver oder Goldgranulat ausgelegt. Es ist damit auch besonders gut zur Raffination entsprechend verunreinigten Goldpulvers geeignet, das durch elektrolytische Abscheidung aus Cyanidlösungen gewonnen wurde, wie sie beispielsweise zum Ablösen des Goldes von Elektronikschrott oder sonstigem Recyclingmaterial eingesetzt werden. Wie bereits erwähnt wurde, enthält dieses Goldpulver herstellungsbedingt bereits einen relativ hohen Anteil an Metalloxiden. Da das erfindungsgemäße Verfahren, entsprechend den obigen Ausführungen, insbesondere auf der gezielten Bildung und Abscheidung von Metalloxiden beruht, ist es auch unter diesem Gesichtspunkt besonders gut zur Raffination entsprechenden Goldpulvers geeignet. Das vorliegende Raffinationsverfahren ist jedoch gleichermaßen gut auch zur Raffination geeignet granulierten oder zerkleinerten, kleinteiligen, folienartigen oder drahtförmigen Goldes oder dergleichen geeignet.

Weitere Merkmale und Vorzüge der vorliegenden Erfindung ergeben sich nicht nur aus den zugehörenden Ansprüchen - für sich und/oder in Kombination - sondern auch aus der nachfolgenden ausführlichen Beschreibung bevorugter erfindungsgemäßer Ausführungsbeispiele.

Bei allen Ausführungsbeispielen wird als Ausgangsmaterial für die Raffination metallisch verunreinigtes Goldpulver verwendet, das durch elektrolytische Abscheidung aus Cyanidlösungen gewonnen wurde. Da die Abscheidung bei hohen Stromdichten erfolgte, umfassen die metallischen Verunreinigungen einen hohen Anteil an Metalloxiden, die bei diesen Reaktionsbedingungen bevorzugt aus den gelösten Metallen gebildet und gemeinsam mit dem Gold abgeschieden werden. Das abgeschiedene Goldpulver besitzt Korngrößen von etwa 50 - 1000 Mikrometer, wobei die Goldkonzentration von der jeweiligen Korngröße abhängig ist. Feinkörniges Goldpulver ist nur relativ gering verunreinigt und besitzt einen hohen Goldanteil von mehr als etwa 80 %, während grobkörniges Goldpulver wesentlich stärker verunreinigt ist und nur eine deutlich geringere Goldkonzentration von etwa 40 % aufweist.

Da dieses Goldpulver bedingt durch die Zusammensetzung der Ausgangslösung noch Anteile an cyanidischen Komplexverbindungen enthält, werden diese zunächst durch Waschen des Goldpulvers bis zu einem pH-Wert von etwa 7 entfernt. Das gewaschene Goldpuiver wird anschließend bei etwa 140 °C getrocknet.

Um den Anteil an Metalloxiden in dem Goldpulver noch weiter zu erhöhen, wird dieses anschließend für 2 h bei 500 °C geglüht, da bei diesen Glühbedingungen die größte Menge an Oxiden gebildet wird. Nach dem Glühen beträgt der Oxidanteil beim feinkörnigen Goldpulver etwa 80 %, während das stärker verunreinigte grobkörnige Goldpulver nur einen Oxidanteil von etwa 50 % aufweist.

Um bei den nachfolgenden Raffinationsschritten möglichst einheitliche Reaktionsbedingungen zu gewährleisten, wird das Goldpulver nach dem Glühen zunächst noch durch Sieben in einzelne Fraktionen mit einer im wesentlichen jeweils gleichen Korngröße unterteilt. Da bei dem aus Cyanidlösungen abgeschiedenen Goldpulver, wie oben bereits erwähnt wurde, die Goldkonzentration mit abnehmender Korngröße stark ansteigt und der Anteil an metallischen Verunreinigungen entsprechend stark abnimmt, weisen die einzelnen Goldpulver-Fraktionen auch jeweils eine im wesentlichen einheitliche Goldkonzentration mit einem entsprechenden einheitlich hohen Anteil an metallischen Verunreinigungen auf.

Das Sieben des Goldpulvers kann jedoch selbstverständlich auch bereits zu einem früheren Zeitpunkt, wie z.B. vor dem Glühen oder vor dem Waschen erfolgen.

Die einzelnen Goldpulver-Fraktionen werden dann entweder jeweils für sich, oder bei manchen Ausführungsbeispielen auch als Mischung mehrerer Goldpulver-Fraktionen, einer zweistufigen Säurebehandlung unterzogen.

In einem ersten Säure-Behandlungsschritt wird das Goldpulver mit konzentrierter Salzsäure behandelt, Diese löst zum einen in einer exothermen Reaktion die vorhandenen Metalloxide, wobei Reaktionstemperaturen von etwa 90 - 100 °C auftreten. Zum anderen bildet sie mit den Oxidanteilen des Kupfers eine Kupfer-II-chloridlösung, die entsprechend ihrem Redoxpotental neben metallischem Kupfer auch die metallischen Verunreinigungen Nickel, Blei und Zink löst. Der Reaktionsverlauf wird durch Messung des Redoxpotentials überwacht und durch entsprechende Zudosierung der Salzsäure bedarfsgerecht gesteuert. Das Redoxpotential sinkt im Verlauf der Reaktion von einem Anfangswert von etwa 500 mV bis auf einen Endwert von etwa 400 mV ab.

Nach Erreichen dieses ersten Redoxpotential-Endwertes von etwa 400 mV wird Luft durch das angefeuchtete Gold geleitet, um das durch Reaktion mit der Salzsäure gebildete einwertige Kupferchlorid teilweise aufzuoxidieren. Diese Aufoxidation erfolgt unter starker Wärmeentwicklung, wobei Temperaturen von mehr als 100 °C erreicht werden. Der Reaktionsverlauf wird durch Messung der Temperatur überwacht.

Bei einem Absinken der Temperatur auf weniger als 100 °C ist die Aufoxidation im wesentlichen abgeschlossen. Das Gold wird anschließend in einem zweiten Säure-Behandlungsschritt mit einer Mischung aus konzentrierter Salzsäure und Wasserstoffperoxid weiter gereinigt. Diese Reinigung wird wiederum durch Messung des Redoxpotentials der Lösung überwacht. Sie wird bis zum Erreichen eines den Abschluß der Reaktion kennzeichnenden zweiten Redoxpotential-Endwertes durchgeführt.

Nach diesem zweiten Säure-Behandlungsschritt, wird das gereinigte Gold noch mit konzentrierter Salzsäure und entionisiertem Wasser gewaschen und anschließend getrocknet. Es kann dann, je nach Bedarf, entweder in einem nachfolgenden Feinstraffinationsverfahren bis zu der gewünschten Reinheit weiter gereinigt, oder aber auch direkt einer weiteren Verwendung zugeführt werden.

Die Behandlungslösungen werden analytisch überprüft. Wenn noch Reste an Gold vorhanden sind, werden diese Lösungen zu Behandlung der nächsten mit Kupfer und anderen Metallen verunreinigen Charge eingesetzt.

Die in der Salzsäure gelösten metallischen Verunreinigungen werden auf bekannte Art und Weise durch Membranelektrolyse zurückgewonnen. Die gereinigte Salzsäure wird im Kreislauf geführt und erneut zur Raffination verwendet.

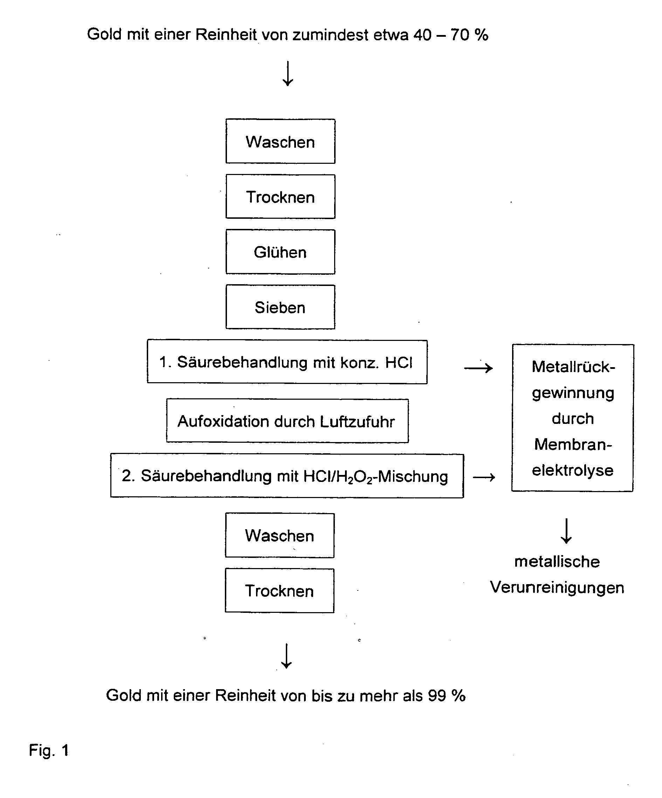

Dieser Verfahrensablauf ist in dem Flussdiagramm in Fig. 1 noch einmal zusammenfassend schematisch dargestellt.

Bei einem ersten Ausführungsbeispiel wird eine Mischung aus 5 unterschiedlichen Gold-Siebfraktionen mit einer Korngröße von weniger als 0,21 mm bis zu einer Korngröße von 0,71 mm auf die beschriebene erfindungsgemäße Art und Weise gereinigt. Die Goldkonzentrationen der einzelnen Gold-Siebfraktionen steigen hierbei mit abnehmender Korngröße stark an. Sie liegen zwischen 64,45 % für die grobkörnigste Gold-Siebfraktion und 95,73 % für das feinkörnigste Gold. Die mittlere Gold-Ausgangskonzentration beträgt 77,6 % bei einem Gesamtgewicht von 8062,77 g. Die Gold-Ausgangskonzentrationen und die Einsatzmengen der einzelnen Gold-Siebfraktionen sind in der folgenden Tabelle 2 zusammengestellt:

**Tab. 2**

| Einsatzmaterial (g) | Au (%) |
|---|---|
| 463,33 | 64,45 |
| 3515,73 | 65,07 |
| 1300,48 | 83,48 |
| 2556,15 | 90,12 |
| 227,08 | 95,73 |
| 8062,77 | 77,60 |

Im ersten Säure-Behandlungsschritt wird das Gold mit 65 I konzentrierter Salzsäure behandelt. Im zweiten Säure-Behandlungsschritt werden 2 l konzentrierte Salzsäure mit einem Zusatz von 30 ml Wasserstoffperoxid eingesetzt. Es ergibt sich eine Gold-Endkonzentration von 99,89 %.

Bedingt durch die stark unterschiedlichen Korngrößen und den stark unterschiedlichen Goldgehalt bzw. Gehalt an Verunreinigungen ist der Arbeits- und Chemikalien aufwand zur Erreichung dieser Gold-Endkonzentration bei dem vorliegenden Ausführungsbeispiel relativ hoch.

Bei einem zweiten Ausführungsbeispiel werden 824,32 g einer stark verunreinigten Gold-Siebfraktion mit einer Korngröße von mehr als 0,23 mm und einer Gold-Ausgangskonzentration von 46,86 % raffiniert. Das Ausgangsmaterial besitzt einen sehr hohen Kupferanteil von 50,27 % und geringe Verunreinigungen an Ni, Ag, Pd, Zn, und Sn. Die genauen Konzentrationen der Verunreinigungen im vorliegenden Ausgangsmaterial und im gereinigten Endmaterial sind in der folgenden Tabelle 3 zusammengestellt.

Im ersten Säure-Behandlungsschritt wird das Gold mit 12 I konzentrierter Salzsäure behandelt. Für die Reinigung des Goldes werden damit nur noch 18,5 % der im ersten Ausführungsbeispiel eingesetzten Salzsäuremenge eingesetzt. Im zweiten Säure-Behandlungsschritt werden wiederum 21 konzentrierte Salzsäure mit einem Zusatz von 30 ml Wasserstoffperoxid verwendet.

**Tab. 3**

| Verunreinigung | Ausgangskonzentration (%) | Endkonzentration (%) |
|---|---|---|
| Cu | 50,27 | 1,084 |
| Ni | 1,33 | 0, 042 |
| Ag | 0,14 | 0,087 |
| Pd | 0, 02 | 0,008 |
| Zn | 0,22 | 0,012 |
| Sn | 1,16 | 0,108 |

Das Redoxpotential fällt beim ersten Säure-Behandlungsschritt von etwa 500 mV auf etwa 400 mV ab und beim zweiten Säure-Behandlungsschritt von etwa 750 mV auf etwa 450 mV.

Die erreichte Gold-Endkonzentration beträgt 98,66 %. Bei einem weiteren Zusatz von 1 1 der genannten Salzsäure-Wasserstoffperoxid-Mischung erhält man Gold mit einer Reinheit von 99,3%.

Bei einem dritten Ausführungsbeispiel werden 5063 g einer mittel stark verunreinigten Gold-Siebfraktion mit einer Korngröße kleiner als 0,23 mm und einer Gold-Ausgangskonzentration von 77,37 % raffiniert. Das Ausgangsmaterial besitzt mit 21,12 % wiederum einen recht hohen Kupferanteil. Darüber hinaus enthält es geringe Verunreinigungen an Ni, Ag, Pd, Zn, Sn und Pb. Die genauen Konzentrationen der Verunreinigungen im vorliegenden Ausgangsmaterial und im gereinigten Endmaterial sind in der folgenden Tabelle 4 zusammengestellt.

Im ersten Säure-Behandlungsschritt werden 26 I konzentrierte Salzsäure eingesetzt. Der zweite Säure-Behandlungsschritt wird entsprechend den ersten beiden Ausführungsbeispielen mit 2 I konzentrierter Salzsäure und einem Zusatz von 30 ml Wasserstoffperoxid durchgeführt.

Die Gold-Endkonzentration beträgt 99,31 %.

| Verunreinigung | Ausgangskonzentration (%) | Endkonzentration (%) |
|---|---|---|
| Cu | 21,12 | 0,33 |
| Ni | 0,31 | 0,07 |
| Ag | 0,04 | 0,025 |
| Pd | 0,008 | 0,01 |
| Zn | 0,038 | 0,009 |
| Sn | 0,14 | 0,044 |
| Pb | 1,49 | 0,141 |

Tab. 4

Bei einem vierten Ausführungsbeispiel werden 4912 g einer gering verunreinigten Gold-Siebfraktion mit einer Korngröße kleiner als 0,23 mm und einer Gold-Ausgangskonzentration von 93,82 % bis zu einer Reinheit von 99,38 % raffiniert. Im ersten und zweiten Säure-Behandlungsschritt werden hierbei 24 I konzentriete Salzsäure bzw. 21 des oben genannten Salzsäure-Wasserstoffperoxid-Gemischs verwendet. Das Ausgangsmaterial ist mit geringen Mengen an Cu, Ni, Ag, Pd, Zn, Sn und Pb verunreinigt. Die genauen Konzentrationen dieser Verunreinigungen im vorliegenden Ausgangsmaterial und im gereinigten Endmaterial sind in der folgenden Tabelle 5 zusammengestellt:

**Tab. 5**

| Verunreinigung | Ausgangskonzentration (%) | Endkonzentration (%) |
|---|---|---|
| Cu | 3,18 | 0,49 |
| Ni | 1,62 | 0,027 |
| Ag | 0,07 | 0,039 |
| Pd | 0,05 | 0,069 |
| Zn | 0,30 | 0,009 |
| Sn | 0,39 | 0,027 |
| Pb | 2,19 | 0,038 |

Bei einem fünften Ausführungsbeispiel werden 5060 g einer gering verunreinigten Gold-Siebfraktion mit einer Korngröße kleiner als 0,23 mm und einer Gold-Ausgangskonzentration von 94,53 % bis zu einer Reinheit von 99,41% raffiniert. Im ersten und zweiten Säure-Behandlungsschritt werden hierbei 18 l konzentriete Salzsäure bzw, 2 I des oben genannten Salzsäure-Wasserstoffperoxid-Gemischs verwendet. Das Ausgangsmaterial ist mit geringen Mengen an Cu, Ni, Ag, Pd, Zn, Sn und Pb verunreinigt. Die genauen Konzentrationen dieser Verunreinigungen im vorliegenden Ausgangsmaterial und im gereinigten Endmaterial sind in der folgenden Tabelle 6 zusammengestellt:

**Tab. 6**

| Verunreinigung | Ausgangskonzentration (%) | Endkonzentration (%) |
|---|---|---|
| Cu | 2,73 | 0,42 |
| Ni | 1,58 | 0,06 |
| Ag | 0,06 | 0,03 |
| Pd | 0,04 | 0,007 |
| Zn | 0,29 | 0,007 |
| Sn | 0,36 | 0,05 |
| Pb | 2,03 | 0,05 |

Bei den bisherigen 5 Ausführungsbeispielen wurde das jeweils eingesetzte Goldpulver im Batchverfahren gereinigt. Hierbei wird ein Rührbehälter zu etwa einem Drittel mit verunreinigtem Gold gefüllt. Das Gold wird mit Salzsäure versetzt und gut durchmischt. Nach erfolgter Reaktion wird die Säure abgesaugt und das Gold wird mit Salzssäure und Wasserstoffperoxid versetzt und dann auf die beschriebene erfindungsgemäße Art und Weise weiterbehandelt.

Im Vergleich hierzu wird in den folgenden beiden Ausführungsbeispielen das Säulenverfahren verwendet.

Bei einem sechsten Ausführungsbeispiel wird eine mittelstark verunreinigte Mischung aus 3 unterschiedlichen Gold-Siebfraktionen mit einer Korngröße von 0,23 mm raffiniert. Die Gold-Siebfraktionen besitzen eine Gold-Ausgangskonzentration zwischen 78,2 % und 89,5 %. Die mittlere Gold-Ausgangskonzentration beträgt 79,8 % bei einem Gesamtgewicht von 8232 g. Die Konzentrationen und die Einsatzmengen der einzelnen Goldfraktionen sind in der folgenden Tabelle 7 zusammengestellt.

In den beiden Säure-Behandlungsschritten werden 27 I konzentrierte Salzsäure bzw. 2 I des oben genannten Salzsäure-Wasserstoffperoxid-Gemischs verwendet.

**Tab. 7**

| Einsatzmaterial (g) | Au (%) |
|---|---|
| 6122 | 78,2 |
| 982 | 78,9 |
| 1128 | 89,5 |
| 8232 | 79,8 |

Das Redoxpotential fällt beim ersten Säure-Behandlungsschritt von etwa 500 mV auf etwa 400 mV ab und beim zweiten Säure-Behandlungsschritt von etwa 750 mV auf etwa 450 mV.

Die Gold-Endkonzentration beträgt 99,73 %.

Bei einem siebten Ausführungsbeispiel wird eine mittelstark verunreinigten Mischung aus 6 unterschiedlichen Gold-Siebfraktionen mit einer Korngröße zwischen 0,23 und 0,72 mm gereinigt. Die Goldkonzentrationen der einzelnen Gold-Siebfraktion steigen hierbei wiederum mit abnehmender Korngröße stark an. Sie liegen zwischen 63,3 % für die grobkörnigste Gold-Siebfraktion und 96,6 % für das feinkörnigste Gold. Die mittlere Gold-Ausgangskonzentration beträgt 81,5 % bei einem Gesamtgewicht von 7485 g. Die Konzentrationen und die Einsatzmengen der einzelnen Gold-Siebfraktionen sind in der folgenden Tabelle 8 zusammengestellt:

**Tab. 8**

| Einsatzmaterial (g) | Au (%) |
|---|---|
| 2373 | 63,3 |
| 982 | 78,9 |
| 1369 | 86,4 |
| 787 | 89,2 |
| 1065 | 94,3 |
| 982 | 96,6 |
| 7485 | 81,5 |

In den beiden Säure-Behandlungsschritten werden 24,6 I konzentrierte Salzsäure bzw. 21 des oben genannten Salzsäure-Wasserstoffperoxid-Gemischs verwendet.

Das Redoxpotential fällt beim ersten Säure-Behandlungsschritt von etwa 500 mV auf etwa 400 mV ab und beim zweiten Säure-Behandlungsschritt von etwa 750 mV auf etwa 450 mV.

Durch das Säulenverfahren lässt sich im Vergleich zum Batch-Verfahren der Anteil des zum Reinigen benötigten Säureeinsatzes verringern.

Bei allen Ausführungsbeispielen wird als Ausgangsmaterial für die Raffination metallisch verunreinigtes Goldpulver verwendet, das durch elektrolytische Abscheidung aus Cyanidlösungen gewonnen wurde und eine bestimmte Korngrößenverteilung besitzt, die - entsprechend den obigen Ausführungen - mit einer entsprechenden Verteilung der Goldkonzentration bzw. der metallischen Verunreinigungen korreliert ist. Es kann jedoch selbstverständlich auch Goldpulver anderer Herkunft oder geeignet zerkleinertes oder granuliertes Ausgangsmaterial durch das erfindungsgemäße Raffinationsverfahren bis zum Erreichen eines bestimmten Reinheitsgades gereinigt werden. Zudem können beispielsweise auch Goldfolien, feine Drähten. Gold-Kleinteile oder dergleichen raffiniert werden. Das Ausgangsmaterial kann hiebei sowohl eine mehr oder weniger einheitliche Größe oder Korngröße als auch eine bestimmte Größen- oder Korngrößenverteilung aufweisen. Die Gold- bzw. Verunreinigungskonzentration dieses Ausgangsmaterials kann unabhängig von der Größe oder Korngröße im wesentlichen einheitlich oder homogen sein, oder aber auch, wie bei den vorliegenden Ausführungsbeispielen, mehr oder weniger stark von der jeweiligen Korngröße abhängen.

## Patentansprüche

1. Verfahren zur Raffination metallisch verunreinigten Goldes, insbesondere pulverförmiges, zerkleinertes, kleinteiliges, folienartiges oder drahtförmiges Gold. durch:
- eine erste Säurebehandlung mit konzentrierter Salzsäure;
- eine zweite Säurebehandlung mit Salzsäure und Wasserstoffperoxid; und
- Waschen des Goldes,
**gekennzeichnet durch**
- die Bildung von Metalloxiden **durch** Glühen des Goldes vor der ersten Säurebehandlung.

2. Verfahren nach Anspruch 1,
**dadurch gekennzeichnet,**
**daß** das Gold bei 450 - 550 °C für 1,5 - 2,5 h geglüht wird.

3. Verfahren nach Anspruch 1 oder 2,
**dadurch gekennzeichnet,**
**daß** das Gold vor dem Glühen gewaschen und getrocknet wird.

4. Verfahren nach einem der vorhergehenden Ansprüche,
**dadurch gekennzeichnet,**
**daß** Gold mit im wesentlichen gleicher Größe, Korngröße oder Goldkonzentration verwendet wird, oder
**daß** das Gold vor der Säurebehandlung in einzelne Chargen mit im wesentlichen gleicher Größe, Korngröße oder Goldkonzentration aufgeteilt wird, die dann separat der Säurebehandlung unterzogen werden.

5. Verfahren nach Anspruch 4,
**dadurch gekennzeichnet,**
**daß** die Aufteilung durch eine Siebanalyse erfolgt.

6. Verfahren nach einem der vorhergehenden Ansprüche,
**dadurch gekennzeichnet,**
**daß** die Behandlung des Goldes mit konzentrierter Salzsäure über das Redoxpotential überwacht und der Einsatz der Salzsäure bedarfsgerecht gesteuert wird.

7. Verfahren nach einem der vorhergehenden Ansprüche,
**dadurch gekennzeichnet,**
**daß** nach der Behandlung des Goldes mit konzentrierter Salzsäure Luft durch das angefeuchtete Gold geleitet wird.

8. Verfahren nach Anspruch 7,
**dadurch gekennzeichnet,**
**daß** die Reaktion der Luft mit der Goldmasse durch Messung der Temperatur überwacht und die Luftzufuhr bedarfsgerecht gesteuert wird.

9. Verfahren nach einem der vorhergehenden Ansprüche,
**dadurch gekennzeichnet,**
**daß** die Behandlung des Goldes mit Salzsäure und Wasserstoffperoxid über deren Mischungsverhältnis gesteuert wird.

10. Verfahren nach einem der vorhergehenden Ansprüche,
**dadurch gekennzeichnet,**
**daß** pro Liter Salzsäure 30 - 120 ml Wasserstoffperoxid zugesetzt werden.

11. Verfahren nach einem der vorhergehenden Ansprüche,
**dadurch gekennzeichnet,**
**daß** die Säurebehandlung des Goldes im Batch- oder Säufenvertahren erfolgt.

12. Verfahren nach Anspruch 11,
**dadurch gekennzeichnet,**
**daß** je nach Größe, Korngröße oder Goldkonzentration Säuleneinrichtungen mit unterschiedlichen Durchmessern und/oder unterschiedlich gestalteten Ausläufen verwendet werden.

13. Verfahren nach einem der vorhergehenden Ansprüche,
**dadurch gekennzeichnet,**
das das Gold nach der Säurebehandlung mit konzentrierter Salzsäure und mit entionisiertem Wasser gewaschen wird.

14. Verfahren nach einem der vorhergehenden Ansprüche,
**dadurch gekennzeichnet,**
**daß** Gold mit einer Korngröße von 10 - 1000 Mikrometer verwendet wird.

15. Verfahren nach einem der vorhergehenden Ansprüche,
**dadurch gekennzeichnet,**
**daß** bei der Raffination Cu, Ni, Ag, Pd, Zn, Sn, Pb, Fe, Cr, Be und/oder Co aus dem Gold abgereichert werden.

16. Verfahren nach einem der vorhergehenden Ansprüche,
**dadurch gekennzeichnet,**
**daß** die abgereicherten metallischen Verunreinigungen durch eine Membranelektrolyse aus der Salzsäure zurückgewonnen werden.

17. Verfahren nach Anspruch 16,
**dadurch gekennzeichnet,**
**daß** die gereinigte Salzsäure im Kreislauf geführt wird.

## Claims

1. Process for refining metallically contaminated gold, in particular gold in powder, comminuted, small-particle, foil or wire form, by:
- a first acid treatment using concentrated hydrochloric acid;
- a second acid treatment using hydrochloric acid and hydrogen peroxide; and
- washing the gold,
**characterized by**
- the formation of metal oxides by annealing the gold prior to the first acid treatment.

2. Process according to Claim 1,
**characterized in that**
the gold is annealed at 450-550°C for 1.5-2.5 h.

3. Process according to Claim 1 or 2,
**characterized in that**
the gold is washed and dried prior to the annealing.

4. Process according to one of the preceding claims,
**characterized in that**
gold of a substantially uniform size, grain size or gold concentration is used, or **in that** the gold, prior to the acid treatment, is divided into individual batches of substantially uniform size, grain size or gold concentration, which are then subjected to the acid treatment separately.

5. Process according to Claim 4, **characterized in that** the division is effected by sieve analysis.

6. Process according to one of the preceding claims,
**characterized in that**
the treatment of the gold with concentrated hydrochloric acid is monitored on the basis of the redox potential and the use of the hydrochloric acid is controlled according to demand.

7. Process according to one of the preceding claims,
**characterized in that**
after the treatment of the gold with concentrated hydrochloric acid air is passed through the moistened gold.

8. Process according to Claim 7,
**characterized in that**
the reaction of the air with the gold mass is monitored by measuring the temperature, and the air supply is controlled according to demand.

9. Process according to one of the preceding claims,
**characterized in that**
the treatment of the gold with hydrochloric acid and hydrogen peroxide is controlled by means of the mixing ratio of these two components.

10. Process according to one of the preceding claims,
**characterized in that**
30-120 ml of hydrogen peroxide are added per litre of hydrochloric acid.

11. Process according to one of the preceding claims,
**characterized in that**
the acid treatment of the gold is carried out in a batch or column process.

12. Process according to Claim 11,
**characterized in that**
column devices with different diameters and/or differently configured outlets are used according to the size, grain size or gold concentration.

13. Process according to one of the preceding claims,
**characterized in that**
after the acid treatment the gold is washed with concentrated hydrochloric acid and with deionised water.

14. Process according to one of the preceding claims,
**characterized in that**
gold with a grain size of 10-1000 micrometers is used.

15. Process according to one of the preceding claims,
**characterized in that**
the refining lowers the levels of Cu, Ni, Ag, Pd, Zn, Sn, Pb, Fe, Cr, Be and/or Co in the gold.

16. Process according to one of the preceding claims,
**characterized in that**
the metallic impurities whose levels have been lowered are recovered from the hydrochloric acid by membrane electrolysis.

17. Process according to Claim 16,
**characterized in that**
the purified hydrochloric acid is recirculated.

## Revendications

1. Procédé pour l'affinage d'or comportant des impuretés métalliques, en particulier d'or en poudre, broyé, en petits fragments, en feuille ou sous forme de fil, par
- un premier traitement acide par de l'acide chlorhydrique concentré ;
- un second traitement acide par de l'acide chlorhydrique et du peroxyde d'hydrogène ; et
- lavage de l'or,
**caractérisé par**
- la formation d'oxydes métalliques par recuit de l'or avant le premier traitement acide.

2. Procédé selon la revendication 1, **caractérisé en ce que** l'or est recuit pendant 1,5 - 2,5 h à 450-550 °C.

3. Procédé selon la revendication 1 ou 2, **caractérisé en ce que** l'or est lavé et séché avant le recuit.

4. Procédé selon l'une quelconque des revendications précédentes, **caractérisé**
**en ce que** l'or est utilisé avec pratiquement la même taille, taille de grain ou concentration d'or, ou
**en ce que** l'or avant le traitement acide est réparti en charges individuelles avec pratiquement la même taille, taille de grain ou concentration d'or, qui sont ensuite soumises séparément au traitement acide.

5. Procédé selon la revendication 4, **caractérisé en ce que** la répartition s'effectue par une analyse par tamisage.

6. Procédé selon l'une quelconque des revendications précédentes, **caractérisé en ce que** le traitement de l'or par de l'acide chlorhydrique concentré est contrôlé au moyen du potentiel redox et l'introduction de l'acide chlorhydrique est réglée en fonction des besoins.

7. Procédé selon l'une quelconque des revendications précédentes, **caractérisé en ce qu'**après le traitement de l'or par de l'acide chlorhydrique concentré on fait passer de l'air à travers l'or humecté.

8. Procédé selon la revendication 7, **caractérisé en ce que** la réaction de l'air avec la masse d'or est contrôlée par mesure de la température et l'apport d'air est réglé en fonction des besoins.

9. Procédé selon l'une quelconque des revendications précédentes, **caractérisé en ce que** le traitement de l'or par de l'acide chlorhydrique et du peroxyde d'hydrogène est réglé par leur rapport de mélange.

10. Procédé selon l'une quelconque des revendications précédentes, **caractérisé en ce qu'**on ajoute 30-120 ml de peroxyde d'hydrogène par litre d'acide chlorhydrique.

11. Procédé selon l'une quelconque des revendications précédentes, **caractérisé en ce que** le traitement acide de l'or s'effectue dans le procédé discontinu ou sur colonne.

12. Procédé selon la revendication 11, **caractérisé en ce qu'**en fonction de la taille, de la taille de grain ou de la concentration de l'or, on utilise des dispositifs de type colonne de différents diamètres et/ou à conduits de sortie de formes différentes.

13. Procédé selon l'une quelconque des revendications précédentes, **caractérisé en ce qu'**avant le traitement acide l'or est lavé avec de l'acide chlorhydrique concentré et avec de l'eau désionisée.

14. Procédé selon l'une quelconque des revendications précédentes, **caractérisé en ce qu'**on utilise de l'or ayant une taille de grain de 10 - 1 000 *µ*m.

15. Procédé selon l'une quelconque des revendications précédentes, **caractérisé en ce que** lors de l'affinage Cu, Ni, Ag, Pd, Zn, Sn, Pb, Fe, Cr, Be et/ou Co sont extraits de l'or.

16. Procédé selon l'une quelconque des revendications précédentes, **caractérisé en ce que** les impuretés métalliques extraites sont récupérées à partir de l'acide chlorhydrique par une électrolyse sur membrane.

17. Procédé selon la revendication 16, **caractérisé en ce que** l'acide chlorhydrique épuré est envoyé dans le circuit.
